Europäisches Patentamt

European Patent Office

Office européen des brevets

(11) Numéro de publication: **0 133 134**
**A2**

(12) **DEMANDE DE BREVET EUROPEEN**

(21) Numéro de dépôt: **84401574.3**

(22) Date de dépôt: **26.07.84**

(51) Int. Cl.⁴: **A 01 C 7/04**

(30) Priorité: 26.07.83 FR 8312446

(43) Date de publication de la demande:
**13.02.85 Bulletin 85/7**

(84) Etats contractants désignés:
**AT BE DE GB NL**

(71) Demandeur: **Le Goff, Joseph**
**Moustoir-Remungol**
**F-56500 Locmine(FR)**

(72) Inventeur: **Le Goff, Joseph**
**Moustoir-Remungol**
**F-56500 Locmine(FR)**

(74) Mandataire: **Phélip, Bruno et al,**
**c/o Cabinet Harlé & Phélip 21, rue de la Rochefoucauld**
**F-75009 Paris(FR)**

(54) Perfectionnements aux semoirs de graines sous paillage.

(57) Dans un semoir à graines sous paillage, autotracteur ou tracté, un châssis porte un ensemble 8 de pose et de mise en terre d'un film de paillage, des distributeurs 12 de graines entraînés en rotation, des roues semeuses 13 entraînées en rotation synchronisée avec les distributeurs et portant, régulièrement répartis radialement sur leur périphérie des godets picots 15, pointés vers l'extérieur, et ouvrables, des moyens 17 pour ouvrir et fermer les picots 15 selon leur position par rapport au point de semage, et éventuellement un ensemble coupe-film en fin de rang. Chaque godet 15 est à fond ouvert pour recevoir une graine lâchée par le distributeur; les moyens 17 d'ouverture et de fermeture des picots sont tels que ceux-ci sont fermés pendant toute la rotation de la roue 13 sauf pendant leur passage dans une zone encadrant de préférence symétriquement le point de semage.

Le semoir est de fabrication relativement peu coûteuse de montage et d'entretien faciles; il fournit des semis très réguliers et très précis.

FIG.1

EP 0 133 134 A2

<u>Perfectionnements aux semoirs de graines sous paillage.</u>

L'invention concerne des perfectionnements aux semoirs à grains sous paillage,c'est-à-dire pour semis (tels que maïs, haricots, pois, betteraves etc.) recouverts d'un film plastique de préférence biodégradable.

Le plus souvent les semoirs à graines sous paillage sont en général équipés d'un ensemble de rouleaux porteurs et dérouleurs du film plastique avec des moyens pour fixer latéralement ce film dans la terre et pour le couper en bout de lignes d'une part et d'autre part d'un nombre de distributeurs pneumatiques en général correspondant au nombre de rangs de semage,qui débitent chacun une graine à la fois et sont tous entraînés en rotation autour d'un axe horizontal commun par le déplacement du semoir ou par des moteurs indépendants,et enfin d'un certain nombre , égal à celui des distributeurs, de roues semeuses entraînées en rotation autour d'un arbre parallèle à celui des distributeurs, chaque roue portant un même nombre de godets picots répartis régulièrement et radialement sur la périphérie de ladite roue correspondant à un distributeur,les picots étant pointés vers l'extérieur,avec des moyens pour ouvrir ou fermer les picots,l'ensemble étant tel que lorsqu'un picot se présente sous l'orifice de lâcher de son distributeur, sa pointe est ouverte pour recevoir une graine qui tombe sur le fond clos du godet,que sa pointe est ensuite fermée pendant la rotation de la roue jusqu'à ce qu'il arrive vertical pointe en bas vers le sol où elle est ouverte par lesdits moyens d'ouverture et de fermeture en perforant le film et en logeant la graine dans le sol sous ledit film de paillage,le picot restant ensuite

DA. 8258 EU 234

ouvert jusqu'à ce que la roue l'amène sous le point de lâcher pour recevoir une nouvelle graine et ainsi de suite.

Ces semoirs connus donnent de bons résultats, mais ils ont un certain nombre d'inconvénients,en plus de leur prix relativement élevé,qui ne justifient leur utilisation que pour de grandes surfaces de semage: l'encombrement en hauteur des ensembles distributeurs-roues semeuses,les réglages fréquents à faire pour assurer une bonne synchronisation entre eux et l'équidistance exigée entre les points de semage des graines, compliquent et allongent d'une manière coûteuse et fatigante le "service" desdits semoirs,diminuant ainsi leur rendement pratique et économique.

Pour bénéficier pleinement des avantages de ces semoirs à grains sous paillage,on a donc été conduit à chercher à palier leurs divers inconvénients tout en conservant au moins et développant leurs avantages. On a eu l'idée,qui est à la base de la présente invention,d'une part d'assurer la coupe du film en bout de rangs en le maintenant sous tension,d'autre part d'entraîner les rotations des distributeurs et des roues semeuses à partir d'un, ou par un même arbre et enfin d'ouvrir le fond des godets et de maintenir les picots fermés pendant chaque tour de roue semeuse sauf pendant leur défilé le long d'un arc relativement court et symétrique par rapport à la verticale passant par le point de semage dans le sol et par l'orifice de lâcher de graine du distributeur.

Dans ces conditions et selon la forme la plus générale de l'invention,les perfectionnements apportés aux semoirs connus précités sont caractérisés en ce que chaque godet est à fond ouvert pour recevoir une graine lâchée par le distributeur, et que les moyens d'ouverture et de fermeture du picot correspondant à un godet sont tels que les picots soient fermés pendant toute la rotation de la roue semeuse sauf pendant leur passage dans une zone de préférence encadrant symétriquement le point de semage.

Selon une première forme de réalisation,lesdits perfectionnements sont caractérisés par le fait que, pour chaque ensemble distributeur-roue semeuse,le châssis du semoir porte un canal tubulaire fixe dont l'orifice supérieur se trouve sous l'orifice de lâcher du distributeur,est ensuite incliné vers le bas dans le sens de la marche du semoir puis s'ouvre par une portion à peu près verticale au-dessus de la position prise par un godet légèrement avant son arrivée à la verticale du point d'ouverture du picot pour le perçage du film et le semage de la graine dans le sol,les moyens d'ouverture et de fermeture des picots les refermant ensuite pour le semage suivant.

Selon une autre variante,les perfectionnements selon l'invention sont caractérisés en ce que chaque godet picot monté sur le voile de la roue semeuse est constitué d'une part par une trémie réceptrice de graine délimitée par le voile ou par une plaque appliquée contre lui,par une paroi inclinée vers l'extérieur à partir du voile et par deux parois perpendiculaires au voile,d'autre part par un picot comportant une première partie fixe en gouttière isocèle dont le sommet et la base sont dans le plan du voile vers l'extérieur et dont la partie large recouvre partiellement l'ouverture de ladite trémie,et une seconde partie mobile constituée par une plaque isocèle correspondant au,et s'appliquant sur le périmètre de la première partie fixe du picot,cette plaque étant montée basculable sur le bord du voile à partir des moyens d'ouverture et de fermeture des picots. Ces moyens sont avantageusement un levier convenablement coudé, pivotable sur l'axe de basculement de la moitié mobile du picot,dont un de ses bras et solidaire et dont l'autre bras porte un galet soumis au voisinage du point de semage,à l'action d'une bande incurvée portée par le châssis et sur laquelle il roule ou non.

Une forme de réalisation particulièrement simple de l'invention dans le cas où de nombreuses petites surfaces sont à ensemencer qui ne justifient pas l'utilisation de semoirs sous paillage à rangs nombreux, ou même ne permettent pas une telle utilisation, consiste en un semoir,perfectionné conformément à l'invention,dans lequel le châssis,qui peut être simplement tracté,muni de ses roues porteuses comporte un arbre relevable et abaissable par tous moyens connus sur lequel sont montés pour être entraînés par lui, une ou deux roues semeuses associées chacune à un distributeur monograine,et équipées de godets picots,les godets étant à fond ouvert et les picots ouvrables,un tube incliné amenant les graines de l'orifice de lâcher du distributeur au fond ouvert du godet arrivé au voisinage avant de la verticale du point de semage.

Dans cette réalisation,la jante de la roue semeuse peut aussi être formée par un certain nombre de plaquettes de roulement au semage fixées sur le pourtour de la jante et dont chacune porte une moitié fixe de picot,par exemple emboutie en même temps que la plaquette,le voile de la roue portant à l'aplomb de chaque demi picot le godet correspondant, et, de préférence un demi picot basculable,emmanché ou soudé sur la plaquette en face de la première moitié de manière à être actionné en ouverture ou en fermeture par un levier du type déjà décrit ci-avant.

L'ensemble coupe-film en fin de rang comporte un vérin à double effet pour actionner une scie en un ou plusieurs éléments solidaires destinés à sectionner chacun un des films déroulés, sur le sol et correspondant par exemple à deux rangs de semage. Monté sur un cadre porté par le châssis du semoir en avant de celui-ci,l'ensemble comporte selon l'invention deux vérins de levage des lames porte scie actionnés de préférence par le conducteur à partir de son siège pour placer les lames en position de coupe ou de route un vérin double effet commandant le mouvement de va et vient des    cies montées élastiquement sur le porte scies,un contact de tout type con nu assurant l'arrêt du sciage quand les lames ont étteint le sol sur lequel est déposé le film; en outre,pour éviter le flottement du film coupé,le châssis porte deux patins de freinage s'appliquant sur les rouleaux de film au moment où le dispositif de sciage est mis en place.

On a décrit ci-après divers exemples de réalisation de semoirs perfectionnés selon l'invention en se référant aux dessins ci-joint dans lesquels:

Fig.1 est une vue schématique en coupe longitudinale d'un semoir;

Fig.2 représente une vue partielle du châssis porteur et d'une roue semeuse à alimentation des godets picots par tube;

Fig.3 est une vue analogue d'un semoir avec godets picots à trémie;

Fig.4 représente une vue d'une partie de semoir simplifié;

Fig.5 représente de face un ensemble coupe film;

Fig.6 représente une autre variante de la figure 1.

Le semoir comporte une partie motrice 1 avec des roues porteuses 2 montées sur son châssis 3; à l'avant on voit un ensemble 3 dérouleur d'un film sur le sol avec les roues creusant le sillon 4, le rouleau porteur du film à poser 5, deux rouleaux applicateurs 6, une roue 7 lestée pressant les bords du film dans le sillon,un dispositif coupe film 8 monté sur le châssis avec ses vérins de levage 9 et porte scie 9' et des patins 10 s'appliquant sur le rouleau applicateur 6 lors de d'arrivée en fin de rang et de mise en position de coupe du film. On voit ensuite un cadre 11 qui porte les distributeurs 12 de graines,ainsi que les roues semeuses 13 entraînées en synchronisme réglable par un arbre 14 actionné par le tracteur ou par un moteur particulier. Les godets picots à fond ouvert 15 sont fixés sur le voile 16 de la roue semeuse 13,pointes vers l'extérieur;le cadre 11 de la roue 13 porte dans sa partie inférieure et symétriquement à la verticale commune de l'orifice de lâcher 12' du distributeur et du point de semage, une bande 17 sur laquelle roule un galet,pour chaque godet, de manière à ouvrir le picot correspondant au voisinage immédiat du point de semage pour lui permettre de perforer le film,de poser la graine lâchée par le distributeur dans le sol et de refermer le picot 15 jusqu'à son retour suivant à sa position inférieure de semage. Lorsqu'un rang a été ensemencé, le conducteur arrête le tracteur et agit sur une commande non représentée pour abaisser le coupe film: les patins 10 s'appliquent alors sur le film du rouleau poseur 6 et le vérin 9' actionne les scies

0133134

qui coupent le film,après quoi le vérin 9 de levage remonte le coupe film en position de repos et le conducteur peut manoeuvrer pour semer les rangs suivants.

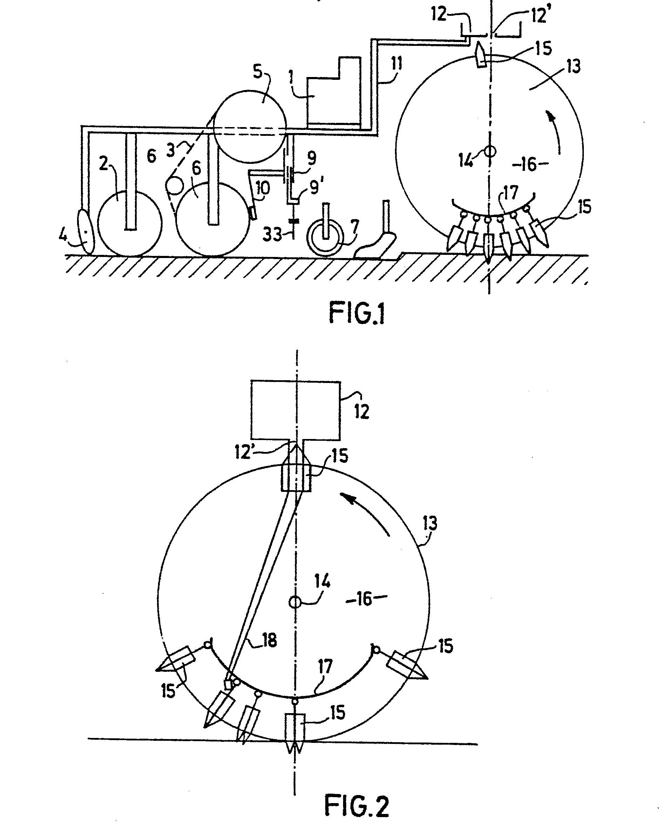

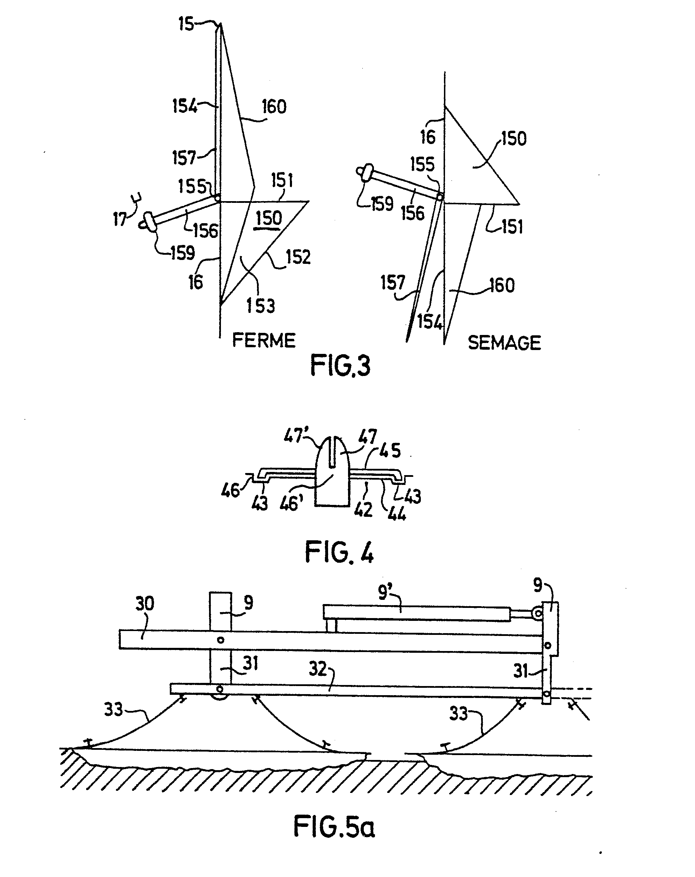

A la figure 2,le godet 15 arrivé en position supérieure continue sa rotation picot correspond fermé;quand il atteint la position A proche de la position de semage,une graine lâchée par le distributeur dans un tube 18 d'abord vertical sous cet orifice,puis incliné vers l'avant puis de nouveau vertical dans sa position "avant semage" du godet picot 15,pénètre dans le fond ouvert dudit godet et parvient dans le picot qui la pose dans le sillon après avoir perforé le film,pour se refermer pour un nouveau tour. Dans le semoir selon la figure 3,le godet picot 15 est également monté suivant un rayon de la roue semeuse 13,il est ici constitué:

-par une trémie 150,ayant son ouverture 151 vers l'extérieur de la roue,et formée d'une paroi (constituée soit par une partie du voile 16 soit par une plaque appliquée contre le voile 16,d'une paroi 152 inclinée vers le haut (extérieur ) à partir du voile, et de deux parois latérales 153 perpendiculaires au voile quand le godet est fixé sur la roue 13,l'ouverture 150 se trouvant au niveau de la périphérie de la roue semeuse.

-par un picot 15 pointé vers l'extérieur à partir de la périphérie de la roue et constitué par une paroi en triangle isocèle plan 154 basculable par sa base autour d'un axe 155 tangent à la périphérie de la roue semeuse cette plaque étant solidaire d'un levier coudé 156 dont le coude 157 est pivotable sur ledit axe et dont le second bras 156 porte un galet 157 enfoncé par une bande 17 fixée au cadre symétriquement au point de semage de la roue semage et ce de manière à écarter la plaque 154 de sa position prolongeant le plan du voile; la seconde partie du picot 15 est constituée par une gouttière 160 isocèle pouvant s'appliquer par ses bords sur les bords de la plaque 154 dont elle a le profil triangulaire et dont la base sensiblement égale à celle de la plaque 154 est fixée sur le voile 16 s'étend de manière à recouvrir une partie de l'ouverture 150 de la trémie,la section plane de la gouttière 160 se trouvant sensiblement dans le prolongement du plan du voile et parallèle à la plaque 154. Avec cette forme du godet picot,une graine lâchée par l'orifice du distributeur tombe dans l'orifice ouvert 150 de la trémie puis dans le picot 15(154-160) d'où elle se loge dans le sol pendant son ouverture,comme il a été indiqué plus haut.

Tous les godets picots décrits peuvent être fabriqués par emboutissage ou par soudure;ils sont de préférence montés sur la roue porteuse par boulonnage pour faciliter leur déplacement éventuel. La bande de roulement des galets d'ouverture et de fermeture est montée concentriquement à l'axe de la roue porteuse et fixée sur le châssis de manière que son début agisse sur le galet du levier coudé pour ouvrir le godet et sa fin pour le refermer.

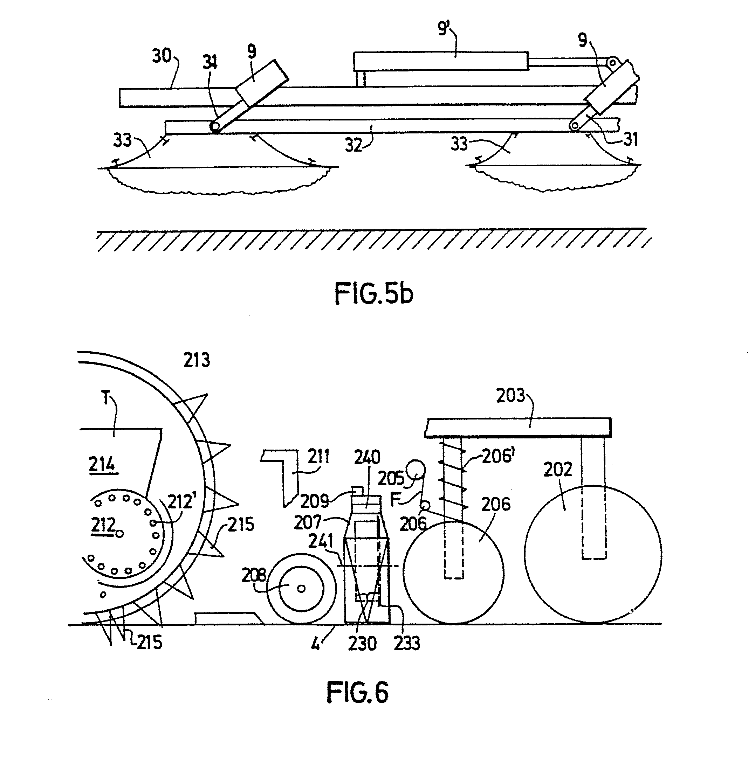

Une forme préférable de réalisation de l'ensemble coupe film est représentée en figure 5; on voit (figure 5a) le dispositif au repos et en figure 5b le dispositif en position de coupe,vu de face par l'avant. L'ensemble est porté par une barre 30; sur cette barre 30 est fixé un vérin double effet 9'(commande du va et vient de la scie 31)dont la tige agit sur deux vérins 9 pivotables sur cette barre.   Ces deux vérins 9 ont leurs tiges respectives 31 articulées par leur extrémité sur une tige 32 à chacune des extrémités de laquelle sont fixées une paire de lames incurvées, légèrement élastiques 33' soutenant une scie. Le semage se fait en position relevée de la tige 32; en fin de rang,le conducteur agit par une commande mécanique ou autre, non représentée,sur les vérins de levages 9 pour faire reposer les scies sur le film sortant du rouleau applicateur en même temps que les patins maintiennent ledit film contre ce rouleau. Le conducteur actionne alors le vérin à double effet 9' dont les tiges sont articulées sur le corps des vérins de levage;dans ces conditions,le mouvement de va et vient des tiges du vérin 9' entraîne en cadence la scie correspondante 33 qui coupe le film 8 en venant en contact du sol;lorsque la coupe est achevée,à raison d'une coupe par paire de rangs de semage,le conducteur actionne l'arrêt du vérin double effet 9' réglé de manière que les vérins 9 de levage soient alors verticaux puis le mouvement de rentrée des vérins 9 qui amènent l'ensemble coupe film en position de repos  (figure 5a). On peut alors manoeuvrer le semoir pour continuer les opérations de semage sur plusieurs rangs nouveaux.

A la figure 4 on voit une partie d'un semoir simplifié,équipé selon l'invention. Le semoir est ici tracté;ses roues porteuses 40 entraînent à la manière connue un arbre 41 sur lequel sont calées des (ou même une)roues semeuses 42;l'arbre 41 peut occuper deux positions l'une "de route" où les roues semeuses ne sont pas en contact avec le sol et l'autre de "semage" dans laquelle le semage a lieu.
On notera que ce semoir peut comporter un ensemble de paillage par film limité à la simple pose et au maintien  latéral du film. La roue semeuse 42 a une jante 43 formée de la juxtaposition sur la périphérie du voile 44 d'un certain nombre d'éléments 45 analogues dans leur forme générale à des patins de chevilles de véhicules. Chaque patin est embouti avec deux rebords 46 à ses extrémités respectives,et est en outre percé d'un (ou éventuellement de plusieurs) trou 46' dans lequel est emmanché à force ou autrement fixé un demi picot 47; ces éléments ou patins 45 sont logés par tous moyens appropriés dans des encoches régulièrement réparties le long de la périphérie de la jante 43. Sur le voile 44 sont disposés à l'amplomb de chaque demi picot 47 un godet ou demi-godet 48 venu de forme ou soudé sur le voile;la seconde moitié du picot ouvrable est logée dans le trou 46' en face du demi picot fixe 47;cette seconde partie est par exemple une plaquette triangulaire 47' s'adaptant sur les bords du demi picot "gouttière" 47 et articulée sur un des bords du trou 46' par un tringlage du type décrit dans les autres exemples.Un semoir ainsi équipé comporte pou des utilisateurs à faibles moyens tous les avantages des semoirs "industriels" sous paillage en leur coutant beaucoup moins cher.

Il est clair que,pour les godets picots,on pourrait les rendre ouvrables par leurs deux mâchoires ; à cet effet,il suffit d'un tringlage articulé d'un côté sur chacune des parois mobiles du picot et de l'autre extrémité munie d'un galet roulant sur une bande pour enfoncer (c'est-à-dire ouvrir le picot) la tige à galet et pour l'extraire en partie du godet pour refermer le picot.

Dans la variante de la figure 6,l'ensemble semeur repose sur un châssis 203 auquel sont fixés un certain nombre de rouleaux porteurs 202 par leurs extrémités légèrement oscillantes pour leur assurer une bonne assise sur le sol;le nombre de ces rouleaux est fixé en fonction du nombre de rangs de semage, à raison de deux par rang. Ensuite sont montés parallèlement aux rouleaux 202 un même nombre de rouleaux applicateurs 206de film alimentés à partir d'un rouleau guideur de film F;des ressorts 20-' réglables en pression permettent de faire appuyer plus ou moins fortement les rouleaux 206 sur le sol. Ensuite est monté en arrière des rouleaux 206 un dispositif coupe film 207 suivi d'une roue plombeuse 208 pressant les bords du film dans le sillon 4. Un cadre 211 porte des trémies T à graines alimentant les distributeurs 212 de graines individuelles à orifice de lâcher 212',les roues semeuses 213 avec les godets à fond ouvert et les picots ouvrables 215. Les roues 213 sont entraînées en synchronisme avec les distributeurs 212, à disques perforés de préférence,par un arbre 214 actionné par le tracteur ou par un moteur séparé. Les trémies T et les distributeurs 212 sont portés par le cadre 211 de manière à être inscrits dans le périmètre tangent aux fonds sensiblement aux fonds ouverts des godets 215,l'orifice de lâcher étant proche de la verticale du point de semage.Les graines sont délivrées dans le fond ouvert d'un godet à la manière déjà décrite ci-dessus au sujet des figures 2 et 3 notamment. Le dispositif coupe film 207 est ici constitué,pour chaque paire de rangs, de deux cylindres 230 assez courts (longs d'environ 20 cm) coaxiaux et à chacune des faces extrêmes desquels est accolée une scie circulaire 233 dont les dents dépassent légèrement la périphérie du cylindre sur lequel elle est montée concentrique; cet ensemble cylindre scies 230-233 est porté par une barre 240 montée sur le châssis perpendiculairement au déplacement du semoir. Un vérin 209 commandé par le conducteur quand le semoir est arrivé en fin de rang,agit sur les ensembles 230-233 de manière telle que, lorsqu'ils se déplacent le long de la barre 240, les scies découpent une bande de film en tournant avec l'axe des cylindres 230 qui, eux, prennent appui sur le sol par leur périphérie,l'axe des cylindres étant disposé parallèlement au sens de déplacement du semoir;des moyens tels que des colliers ou autres 234 supportent les cylindres et sont reliés au vérin d'actionnement 209.En outre chaque ensemble cylindre-scies est solidaire d'un butoir 241 engageant le sol sur une profondeur réglable par tous moyens connus derrière les scies de manière à recouvrir les deux bords des films avant et après la bande découpée par elles,ce qui empêche le film posé d'être soulevé de terre.

La disposition "inscrite" des trémies et des distributeurs, visée dans l'exemple de figure 6,est naturellement utilisée avantageusement dans les autres formes de réalisation décrites; il y a , grâce à cette disposition diminution de l'encombrement des ensembles trémies distributeurs, réduction et grande facilité des interventions sur les mécanismes tout en rendant plus aisé le chargement des trémies. Il apparaît bien de la description précédente,comme de nombreux essais,que le semoir perfectionné selon l'invention,entraîne effectivement les avantages annoncés et attendus;il est de fabrication relativement peu coûteuse, de montage et d'entretien très faciles tout en assurant des semis très réguliers et extrêmement précis.

0133134

## REVENDICATIONS

1. Perfectionnements aux semoirs à graines sous paillage,autotracteur ou tracté sur le châssis duquel sont montés un ensemble 8 de pose , et de mise en terre d'un film de paillage,des distributeurs 12 pneumatiques de graines entraînés en rotation, des roues semeuses 13 entraînées en rotation synchronisée avec celle des distributeurs et portant,régulièrement et radialement répartis sur leur périphérie des godets picots 15 ouvrables pointés vers l'extérieur et des moyens pour amener dans un godet picot 15 une graine lâchée par le distributeur,des moyens 17 pour ouvrir et fermer les picots en fonction de leur position par rapport au point de semage dans le sol et éventuellement un ensemble coupe film 9 en fin de rang, ces perfectionnements étant caractérisés en ce que chaque godet radial est à fond ouvert pour recevoir une graine lâchée par le distributeur,et que les moyens d'ouverture et de fermeture des picots radiaux sont tels que les picots soient fermés pendant toute la rotation de la roue semeuse sauf pendant leur passage dans une zone encadrant de préférence symétriquement le point de semage.

2. Perfectionnements selon la revendication 1 caractérisés par le fait que pour chaque ensemble distributeur 12 -roue semeuse 13, le châssis du semoir porte un canal tubulaire fixe 18 dont l'orifice supérieur se trouve sous l'orifice 12' de lâcher du distributeur,est ensuite incliné vers le bas dans le sens de la marche,puis s'ouvre par une portion à peu près verticale au dessus de la position prise par un godet 15 légèrement avant son arrivée à la verticale du point d'ouverture du picot pour le perçage du film et le semage de la graine dans le sol,les moyens d'ouverture et de fermeture 17 des picots les refermant ensuite pour le semage suivant.

3. Perfectionnements selon la revendication 1 caractérisés en ce que chaque godet picot 15 monté sur le voile 16 de la roue semeuse est constitué d'une part par une trémie réceptrice 150 de graine délimitée par le voile ou par une plaque appliquée sur le voile,par une pièce 134 inclinée 15 vers l'extérieur 152 à partir du voile 16 et par deux parois 153 latérales perpendiculaires au voile, d'autre part par un picot 15 comportant une première partie fixe en gouttière isocèle 160 dont le sommet et la base dans le plan du voile vers l'extérieur et dont la partie large recouvre partiellement l'ouverture de ladite trémie,et une seconde partie mobile constituée par une plaque isocèle 150 correspondant au et s'appliquant sur le périmètre de la première partie fixe du picot,cette plaque étant basculable sur le bord du voile à partir des moyens d'ouverture et de fermeture 17 des picots.

4. Perfectionnements selon l'une des revendications précédentes caractérisés en ce que les moyens d'ouverture et de fermeture des picots comportent un levier coudé pivotable sur l'axe de basculement de la moitié mobile du picot, un des bras 156 du levier étant solidaire de cette partie mobile et l'autre 158 portant à son extrémité un galet 159 roulant ou non,suivant la position du picot en rotation avec la roue,sur une bande 17 portée sur le châssis et s'étendant symétriquement par rapport à la position de semage.

5.Perfectionnements aux semoirs, selon l'une des revendications précédentes caractérisés en ce que,notamment pour le semage sur de petites surfaces, le châssis avantageusement tracté,est muni d'un arbre 41 relevable par tous moyens connus,que sur cet arbre entraîné à partir des roues porteuses 40 sont montées une ou deux roues semeuses 42 associées chacune à un distributeur 12 de graines de manière à tourner en synchronisme les roues semeuses étant équipées de godets 15 selon l'une des revendications 1 à 3.

6. Semoir selon la revendication 5 caractérisé en ce que la jante 43 de la roue semeuse porte,fixées sur son pourtour extérieur,des plaquettes 45 régulièrement réparties et éventuellement amovibles,dont chacune présente un trou 46' de préférence rectangulaire dans lequel est fixé, pointe vers l'extérieur,un demi-picot 47,l'autre moitié 48 du picot ouvrable étant logé dans ce trou avec sa base enroulée autour d'un axe fixé à la plaquette,de manière à pouvoir basculer autour de lui pour s'appliquer sur, ou écarter d'elle,sous l'action d'un levier coudé dont l'extrémité est solidaire de la plaquette formant la moitié ouvrable du picot et l'autre extrémité roule par un galet sur une bande portée par le châssis,ce dernier portant un tube débouchant en haut sous l'orifice de lâcher du distributeur et s'ouvrant en bas au-dessus de la position prise par le "godet picot" un peu avant le point de semage.

7.Perfectionnements selon l'une des revendications 1 à 5 caractérisés en ce que l'ensemble coupe film porté par le châssis du semoir comporte une tige 30 parallèle aux rouleaux 5 porte film et applicateurs 6 sur laquelle est monté un vérin 9' double effet et deux vérins 9 de levage de l'ensemble scie 33,le passage de la position repos à la position sciage et inversement s'effectuant sous une commande appropriée des vérins respectifs par actionnement des vérins de levage puis du vérin double effet relié à articulation à chacun des vérins de levage articulés aussi sur la barre scie, de manière à procéder au sciage en position basse des derniers vérins,des patins 10 étant prévus pivotants sur la tige pour appliquer contre le rouleau 6 applicateur lorsque la scie est en position de sciage.

8. Perfectionnements selon l'une quelconque des revendications 1 à 7 caractérisés en ce que l'ensemble trémie-distributeur 12 de chaque rang de semage est porté par le châssis de manière telle qu'il soit inscrit dans le périmètre tangent aux fonds ouverts des godets picots et que l'orifice de lâcher soit proche de la verticale au point de lâcher des graines.

9.Perfectionnements selon l'une des revendications précédentes,caractérisés en ce que le dispositif 207 coupe film en fin de rang et monté en arrière des rouleaux applicateurs 206 de film,est constitué par une barre 240 montée fixe sur le châssis et transversalement au sens de déplacement du semoir,et de longueur correspondant par exemple à deux rangs de semage,par un ensemble de deux cylindres 230 coaxiaux à chaque extrémité desquels est accolée solidairement une scie circulaire 233 dont les dents font saillie au-delà de la périphérie des cylindres, par des moyens 234 pour supporter les ensembles cylindres 230 scies à rotation autour de leur axe disposé parallèlement au déplacement du semoir,par un vérin 209 commandé par le conducteur et reliés auxdits moyens de support pour les déplacer avec les ensembles cylindres scies le long de la barre transversale  et par au moins un butoir 241 solidaire de ce déplacement transversal des cylindres-scies,et de pénétration réglable dans le sol, les positions et les dimensions des barres,ensembles cylindres-scies et butoir étant choisies pour que,pendant leur déplacement de coupe les cylindres reposent sur le sol par l'intermédiaire du film à couper,que les scies découpent ledit film et le buttoir recouvre de terre les deux bords de la bande découpée par les scies d'un ensemble.

1/3

FIG.1

FIG.2

FIG.3

FIG. 4

FIG.5a

3/3

FIG.5b

FIG.6